# EUROPEAN PATENT APPLICATION

(11) **EP 4 617 024 A1**
(43) Date of publication of application: **17.09.2025**
(21) Application number: 25161235.4
(22) Date of filing: 03.03.2025
(51) Int. Cl.: B27C 5/06, B23Q 16/00

(54) **PRECISION ADJUSTMENT SYSTEM FOR THE POSITIONING OF A WORKPIECE**

(30) Priority: 11.03.2024 IT 202400005434
(71) Applicant: SCM Group S.p.A., 47921 Rimini (RN) (IT)
(72) Inventor: BALDACCI, Marco, 47921 RIMINI (IT)
(74) Representative: Tiburzi, Andrea

(57) **Abstract**

The present invention concerns a system (S) for adjusting the positioning of workpieces to be machined in a machining machine (M) comprising a main body (1) extending along a direction (X) from a first end (11) to a second end (12), a reference means (50) for positioning a workpiece, wherein said reference means (50), when in a first supporting position, is arranged in proximity to said second end (12), at least one actuator (20) of said reference means (50) capable of moving said reference means (50) from said first supporting position, wherein it is in a supporting position for the workpiece, to a second operating position, wherein said reference means (50) is in an excluding position for the workpiece, spaced from said second end (12), and vice versa; wherein said reference means (50) comprises a lever portion (502_{b}) movable in rotation and translation with respect to said main body (1), in proximity to said second end (12), and wherein said system (S) comprises a device (40) arranged near said first end (11), capable of translating said lever portion (502_{b}) to adjust the positioning depth of said workpiece.

The present invention also concerns a machine (M) comprising said system (S).

## Description

The present invention concerns a system for regulating the positioning of a piece to be worked, in particular of a piece of wood or the like, which requires machining, by means of a machining machine, in which to place said piece with a particular inclination with respect to a tool of said machine.

### Field of invention

More in detail, the invention concerns a system of the aforementioned type, designed and realized in particular for tenoning, mortising, moulding, profiling and drilling machines, but which can be used for any machine for processing wooden or similar pieces, fibre-cement, plastic materials, such as for example resins and wood composite plastic materials, and expanded materials, for example, polyurethane and polystyrene, of which transversal machining with respect to a dimension of the piece to be worked is necessary.

In the following the description will be directed to a tenoning machine having a precision positioning adjustment system, but it is clear that it should not be considered limited to this specific use.

### Prior art

As is well known, there are bilateral tenoning machines designed for working the head and/or tail of wooden elements for a wide range of applications, such as uprights and beams of doors and windows, flooring strips, and small-sized strips, for example usable for doors or furniture. These tenoners are characterized by the possibility of working the strips or planks_according to a preferred angle. The preferred angles used for a wide range of applications are 45° or 90°.

As is known, working a strip according to a preferred angle of 45° allows carrying out "miter-door" type work, for example to create small doors. The pieces or strips obtained from these machining can allow assembly with further strips, in which the head of a strip is placed at an angle of 90° with respect to the tail of a further strip. In particular, in the case of strips obtained from processes carried out using tenoning and mortising machines, a tenon can be oriented at an angle equal to 45° with respect to the head of a strip, and be assembled with a mortise oriented at an angle equal to 45° with respect to the tail of a further strip.

Using a preferred angle of 90°, however, is more suitable for other applications, such as "face-frame" type applications, in which the slats made to be assembled are assembled with further slats by means of perpendicular couplings between them.

As is known, current tenoning machines include a tab, or lever, usually made of nylon, which serves the purpose of interfering with the strip to be machined to define the quantity of material to be removed, i.e. it allows adjusting the cutting angle of the piece.

The tab has two adjustment screws and is adjusted by the user during testing. In particular, the user adjusts the two adjustment screws from above with a socket wrench.

It seems clear that this procedure cannot guarantee repeatable high-precision recording as it is entrusted to inter-user variability and the variability between one positioning and the next.

Furthermore, current means of adjusting or recording positioning are not error-free. In fact, there is no means of verifying registration, i.e. correct positioning before or during machining. Therefore, the user can prove the actual incorrect positioning only after carrying out the intended work.

It seems clear that this post-working verification procedure has the disadvantage that if the registration is not sufficiently precise, as the latter does not have a system for verifying it before or during working, the pieces will be discarded, resulting in an inefficient machining.

A further disadvantage of current tenoning machines is the need to stop the machine in order to change the positioning angle. In fact, to change the processing angle from 45° to 90° or vice versa it is necessary to stop the machine and modify the rotation of the adjustment system and the position of the reference lever.

Furthermore, current tenoning machines do not allow the depth of the workings to be varied. In particular, it is only possible to obtain tenons and mortises with a depth of 0.5 inches.

Furthermore, these systems do not have control of the force to be used for inserting the piece to be worked. Therefore, excessive force can cause damage, over time, to the system or the tab against which the piece is placed.

Also evident is the need to provide a machine equipped with a precision adjustment system capable of not requiring the machine to be stopped to modify the positioning of the pieces, in which said adjustment system allows for a simpler and more flexible adjustment to be made, in such a way as to be able to vary the depth at which the machine carries out the machining, for example offering the possibility of varying the depth between 0.5 and 1 inch.

### Purpose of the invention

In light of the above, it is therefore the aim of the present invention to provide a system for precision regulation of the depth and positioning of pieces to be machined transversally by means of a machine for machining them.

Another object of the invention is to provide a machine for machining parts equipped with said precision depth adjustment system.

### Object of the invention

These and other results are obtained according to the invention with a system for regulating the depth and positioning of pieces to be machined transversally using a machine for processing them.

The specific object of the present invention is therefore a system as defined in claim 1.

Preferred embodiments are defined in the dependent claims.

### Brief description of the figures

The present invention will be now described, for illustrative but not limitative purposes, according to its preferred embodiments, with particular reference to the figures of the enclosed drawings, wherein:
figure 1A shows, in perspective view, a recording system of a tenoning machine arranged in a first working configuration;
figure 1B shows, in a side view, the system of figure 1A in a support position for the piece to be worked;
figure 1C shows, in a side view, the system of figure 1A in a position for machining the piece;
figure 2A shows, in perspective view, the recording system of figure 1A in a second working configuration;
figure 2B shows, in a side view, the system of figure 2A, in a second working configuration, in a support position for the piece to be worked;
figure 2C shows, in a side view, the system of figure 2A in a position for machining the piece;
figure 3A shows, in perspective view, a system for precision adjustment of the depth of positioning of a workpiece, object of the present invention, in a first operating configuration of minimum depth;
figure 3B shows, in a side view, the system of figure 3A in a support position for the piece to be worked;
figure 3C shows, in a side view, the system of figure 3A in a position for machining the piece, in which the reference is partially excluded from the work plane corresponding to a portion of the piece to be machined;
figure 3D shows, in a lateral view, the system of figure 3A in which the reference is completely excluded from the work plane;
figure 4A shows, in perspective view, a system for precision adjustment of the depth of positioning of a workpiece, object of the present invention, in a second operating configuration of maximum depth;
figure 4B shows, in a side view, the system of figure 4A in a support position for the piece to be worked;
figure 4C shows, in a side view, the system of figure 4A in a position for machining the piece, in which the reference is partially excluded from the work surface;
figure 4D shows, in a lateral view, the system of figure 4A in which the reference is completely excluded from the work plane;
figure 5 shows, in perspective view, the components of the regulation system, which is the object of the present invention; and
figure 6 shows, in perspective view, a tenoning machine including the adjustment system, the object of the present invention.

### Detailed description

In the various figures the similar parts will be indicated with the same numerical references.

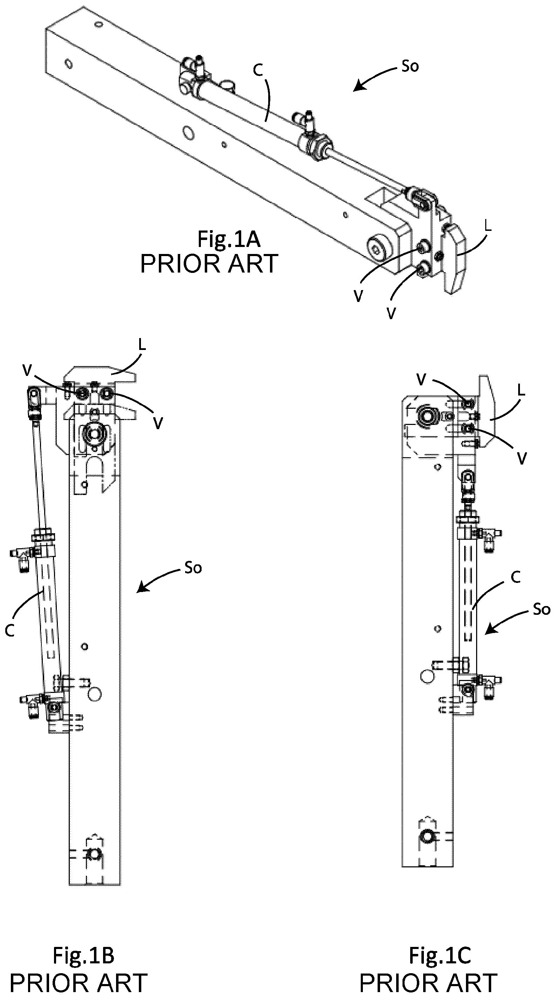

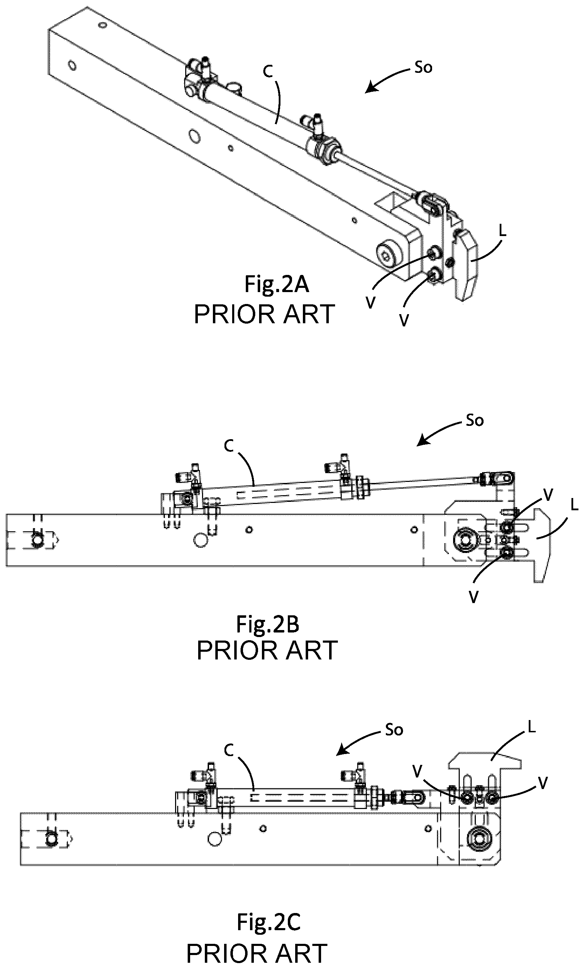

Referring to figures 1 and 2, an S₀ of the known art for the positioning of wokpieces to be machined transversely using a machining machine comprises a tab L, which acts as a reference for the positioning of the pieces to be machined, operated by a piston and a cylinder C, in which the depth at which to position said tab L is determined manually by an operator who tightens or loosens two screws V against two respective slots of said tab L.

In particular, figures 1B and 1C show the prior art system S₀ at a minimum machining depth, respectively in a workpiece support and workpiece machining position. When a greater machining depth is required, the operator stops the machine, adjusts the two screws using a socket wrench to increase the distance of the L tab, tightens the screws and starts a new machining process, without controlled depth adjustment. Figures 2B and 2C show the prior art system S₀ respectively, in a position of resting the piece and machining the piece, at a greater depth than the depth in figure 1.

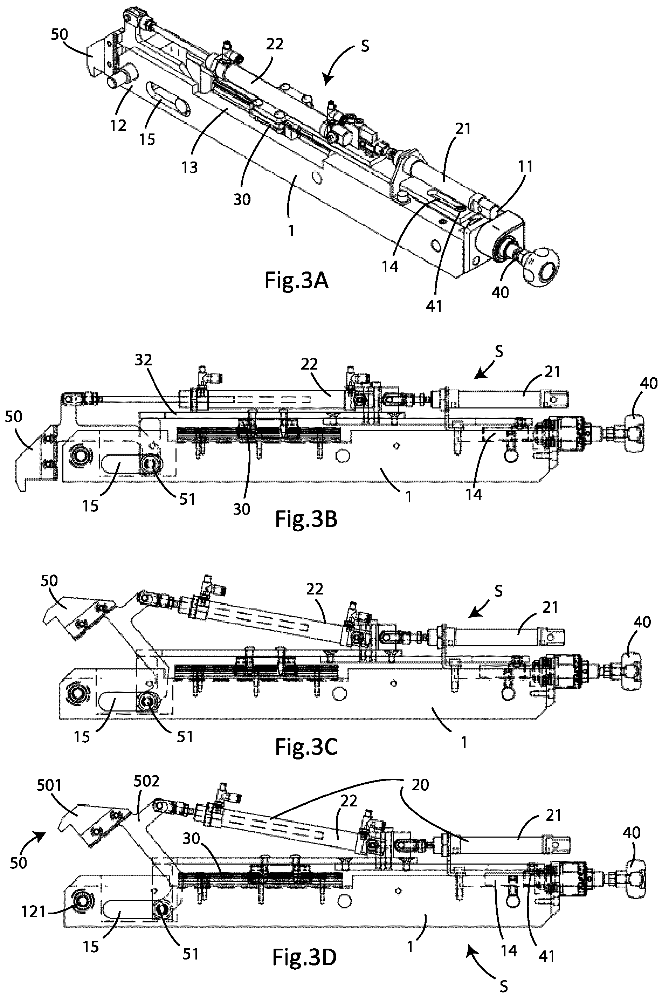

Referring to figure 3A, a system S for adjusting the positioning of workpieces in a processing machine M is shown. The system S differs from the prior art systems described above as described below.

The system S essentially comprises a main body 1, a reference means 50, for positioning a piece to be machined, actuator means 20, capable of moving said reference means 50, and a device 40 for regulating the positioning depth of said workpiece.

The main body 1 extends along a direction X from a first end 11 to a second end 12.

The reference means 50 is configured to pass from a first support position to a second operating position and vice versa.

When the reference means 50 is in said first support position, it is arranged in proximity to said second end 12, and is in a support position for the piece, i.e. it allows the workpiece to be supported to define its position with respect to the X direction.

When the reference means 50 is in said second operating position, it is arranged in an exclusion position for the workpiece, spaced from said second end 12, such that the reference means 50 is excluded from the working space of a machining tool of the machine for machining the workpiece.

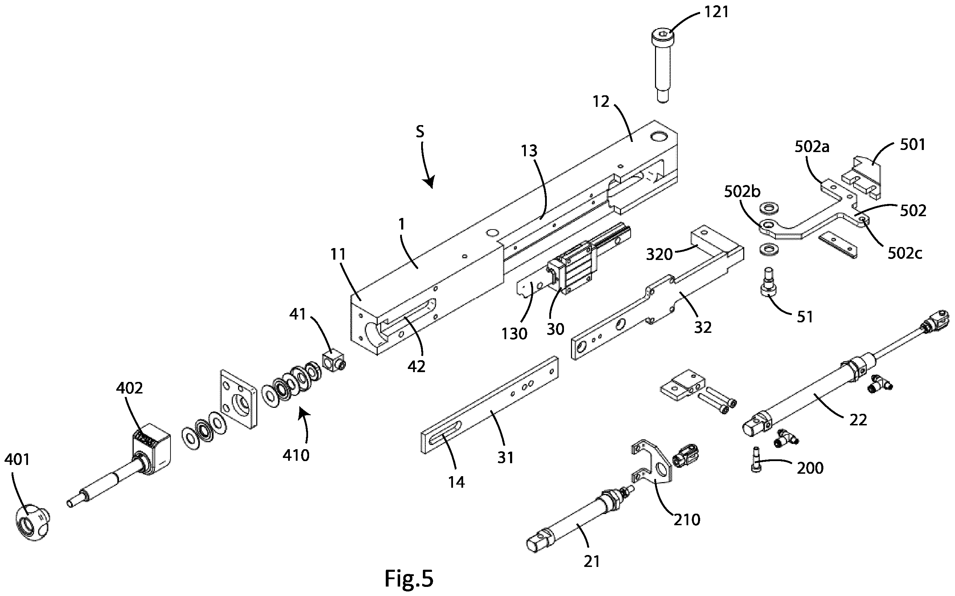

With reference to figure 5, the reference means 50 comprises a lever portion 502_{b}, which is mobile in rotation and translation with respect to said main body 1.

In particular, the lever portion 502_{b}, can translate with respect to said main body 1 and can rotate with respect to a pin 51 coupled to the main body 1.

According to preferred embodiments of the present invention, as shown in figure 5, the reference means comprises a head 501 and a member 502, wherein said member 502 can have the shape of a rod, a segment or have a plurality of vertices.

Said member 502 can comprise three vertices or ends, in which a first vertex 502ₐ is coupled to said head 501, a second vertex coincides with said lever portion 502_{b}, and a third vertex 502_{c} is coupled to said actuator means 20.

Said lever portion 502_{b} it is arranged near said second end 12 of the main body 1.

Additionally, the leverage portion 502_{b} it can be connected to the main body 1 via a pin 51.

The device 40 is arranged near said first end 11 and is connected to said lever portion 502_{b} of the member 502, to be able to translate the member 502 itself, to adjust the positioning depth of said piece.

Some embodiments provide that the device 40 is capable of moving a limit switch or stop element 41 operationally connected to a first slot 14, as will be described below.

As shown in figure 3A, the system S can comprise a groove or recess 13, on which a linear guide 130 is arranged and rigidly coupled (the linear guide is not shown in Figure 3A, but is illustrated in figure 5), said guide being arranged along the main body 1, and a slider, or carriage, or runner 30 slidably coupled to said linear guide 130.

The slider 30 can be mounted integral with said first slot 14 and able to slide along said X direction. Therefore, both the slider 30 and said first slot 14 are mobile, and able to translate along X, one integral with the other.

Where present, said slider 30 is connected to a plate 31 and/or 32, which is connected to said lever portion 502_{b} such that said lever portion 502_{b} can slide along a second slot 15 arranged along said X direction to adjust the positioning depth of said workpiece when said element 30 slides due to the movement of said first slot 14.

With reference to figure 5, a first plate 31 is connected by means of a joint 210 and a pin to said first actuator 21, in such a way that as a result of the actuation of actuator 21, said plate is moved integrally, for example, with a piston of said actuator 21.

Again with reference to figure 5, a second plate 32 is integral with said first plate 31, so it translates integral with the latter.

The plate 32 also has a protrusion 320 which connects to the main body 1 and to the lever portion 502_{b}.

According to alternative embodiments, the first plate 31 and the second plate 32 can be replaced by a single plate.

Again with reference to figure 3A, said actuator means 20 comprise at least one actuator of said reference means 50.

In preferred embodiments, there is a first actuator means 21 arranged close to said first end 11 and substantially parallel to said main body 1, and a second actuator means 22, operatively connected with said first actuator means 21.

The first actuator means 21 can comprise a first piston and a first cylinder configured to push a plate 31 or 32, connected to the first slot 14, towards the second end 12 and, consequently, translate said depth adjustment element 30 along the linear guide 130 to translate the lever portion 502_{b} and the pin 51 connected to it along said second slot 15.

The second actuator means 22 is capable of rotating around a pin 200, and preferably comprises a second cylinder and a second piston, which, when in use, and actuated by an energy line, for example pneumatic or electric, is capable of retracting towards the cylinder in such a way as to bring said reference means 50 from said first support position, to said second operating or exclusion position, or to extend in the opposite direction.

Therefore, the rotation of the second actuator 22 allows the reference means 50 to be excluded from the work surface of the piece.

In some embodiments each actuator has its own energy supply line.

In an alternative embodiment, a single, for example, pneumatic power line powers both actuator means 21 and 22, when each of them consists of a cylinder and a piston.

In some examples, the first slot 14 is operationally connected to a portion of the piston of the first actuator 21 by means of a first rod 31, and said depth adjustment element 30 is operationally connected to the lever portion 502_{b} by means of a second rod 32, which said slider 30 is integral to, for example joined by one or more screws or welded to it.

According to some embodiments, the device 40 is capable of moving said limit switch 41, which is operatively connected to said first plate 31. Since the first plate 31 comprises the slot 14, the movement of the first plate 31 along the X axis also causes the movement of the first slot 14. In particular, the translation of the first plate 31, and then of the first slot 14, allows for the adjustment of the positioning depth of the workpiece by regulating the translation of the lever portion 502_{b} along the second slot 15, since the movement of the first plate 31 also causes the movement of the second plate 32, which is connected to the pin 51. This pin is coupled to the lever portion 502_{b} and is slidable along the second slot 15. In this context, said limit switch 41 is capable of stopping the stroke of said movable first slot 14, counteracting the action of the first actuator 21, which, when in use and powered by an energy source, such as pneumatic or electric, pushes said first plate 31 and said first slot 14 toward the second end 12 of the main body 1.

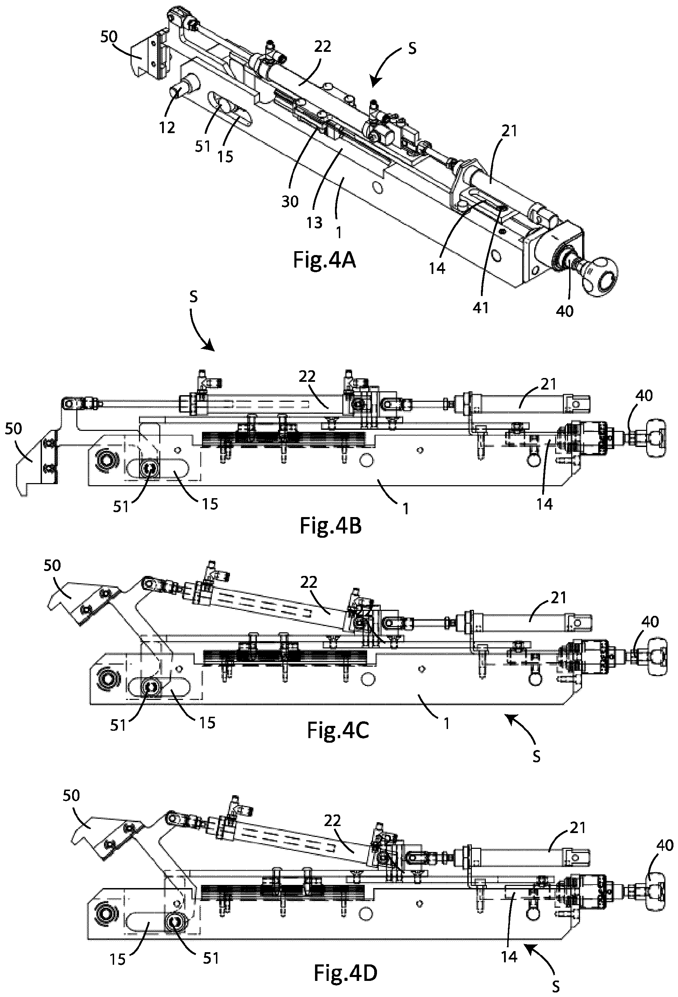

Differently from figure 3A, where system S is shown in a first minimum depth configuration, figure 4A shows system S when it is in a second maximum depth configuration.

This maximum depth can be between 25 mm and 50 mm. Therefore, the system S can adjust, with micrometric precision, the depth to which to place a workpiece, for example between 0 and 50 mm.

According to other embodiments, it is possible to increase or reduce the different precision by changing the adjustment means.

To ensure micrometric precision of the depth adjustment, the device 40 can comprise a micrometric stop adjuster to vary the positioning depth.

Said micrometric regulator can comprise an electrically driven motor, preferably a stepper motor, or other controlled regulation system.

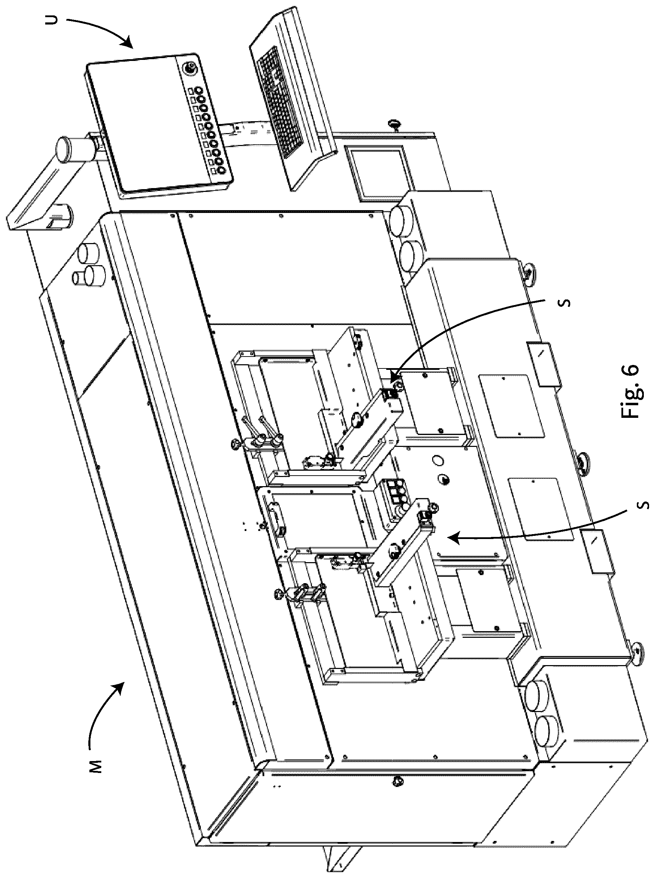

According to some preferred embodiments, the micrometric regulator is operated by a control unit U, as shown in figure 6, on the basis of signals or commands given by the operator or automatically by the machine depending on the machining program to be carried out on the workpiece.

With reference to figure 5, the micrometric stop regulator comprises a knob 401 connected to a threaded stem, in which the knob 401 cooperates with the stem to adjust the depth of positioning and/or the stop of said limit switch 41.

In particular, the limit switch 41 is arranged on a track 42, obtained on said main body 1, and to ensure that each rotation of the stem corresponds to a translation of the limit switch 41, a clutch is used to reduce the play between the stem itself and the internal threading of the limit switch.

According to some embodiments, said clutch comprises a lubricant made of nylon, bronze, brass, polypropylene, or a combination thereof.

Furthermore, one or more ball bearings 410 can be arranged between the stem and the limit switch 41.

The system S is configured to be used, in particular, for a machine M, such as the one shown in figure 6, for machining pieces made of wood, fiber cement, plastic materials, resins, wood composites, expanded materials, or the like.

Said machine M may be a tenoning machine, a mortising machine, a moulding machine, a profiling machine or a drilling machine, or a machine capable of allowing machining of a workpiece arranged transversally with respect to a machining tool of said machine, for example to make cuts or to produce tenons and/or mortises with an angle of 45° or 90°.

The operation of the S system described above is as follows.

When a workpiece must be machined at a minimum distance, the device 40 is in a configuration, as shown in figure 3B, such as not to allow a translation of the first plate 31 due to the effect of said at least one actuator 20, and in particular the first actuator 21 so that the pin 51 and the lever portion 502_{b} they are arranged near the end of the second slot 15 furthest from the second end 12 of the main body 1. In particular, in this configuration, the limit switch 41 acts as a stop for the slot 14, which therefore does not move from the position of minimum depth.

Once the workpiece has been positioned in the desired position, said at least one actuator, for example the second actuator 22, is activated to bring the reference means 50 to the exclusion position, as shown in figure 3D, to prevent the latter from interfering with the machining of the workpiece.

As can be seen from figure 3C, to move from the support position to the exclusion position, the reference means 50 passes through partial exclusion positions interposed between the positions shown in figures 3B and 3C.

When increasing the depth at which to position the reference means 50 is required, the device 40 adjusts in a controlled manner the limit switch 41, which as described above, causes the movement of a first slot 14, which leads to the translation of the pin 51 and the lever portion 502_{b} along the second slot 15, towards the second end 12 of the main body 1.

Similar to what happens for the minimum depth configuration, once the workpiece has been positioned in the desired position, as shown in figure 4B, at least one actuator, for example the second actuator 22 rotates to bring the reference means 50 to the exclusion position, as shown in figure 4C, to prevent the latter from interfering with the machining of the workpiece.

Figure 4D shows the system S in the exclusion position, in which the device 40 retracts said limit switch 41 in such a way that, when the actuator 21 returns to a retracted position (for example the piston retracts towards the first end of the central body 1), the pin 51 and the lever portion 502_{b} translate along the second slot 15 towards the first end 11 of the main body 1. This is possible because the actuator 21 rules the translation of the elements 14 and 31, 30 and 32, 502 and 51, between a retracted position and an extracted position, adjustable according to the position of the limit switch 41.

### Advantages

An advantage of the present invention is to allow the adjustment of the positioning depth in a controlled and simplified manner.

A further advantage involves checking the depth at which to machine a piece using a machining machine, avoiding stopping the machine.

Another advantage of the present invention is to provide an adjustment system capable of increasing the variation of the depth at which to arrange the pieces to be machined, so as to increase the production capacity of a machine equipped with such a system.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. System (S) for adjusting the positioning of workpieces to be machined in a machining machine (M) comprising:
a main body (1) extending along a direction (X) from a first end (11) to a second end (12);
a reference means (50) for positioning a workpiece, wherein said reference means (50), when in a first supporting position, is arranged in proximity to said second end (12);
at least one actuator (20) of said reference means (50) capable of moving said reference means (50) from said first supporting position, wherein it is in a supporting position for the workpiece, to a second operating position, wherein said reference means (50) is in an excluding position for the workpiece, spaced from said second end (12), and vice versa; wherein said system (S) is **characterized**
**in that** said reference means (50) comprises a lever portion (502_{b}) movable in rotation and translation with respect to said main body (1), in proximity to said second end (12), and
**in that** said system (S) comprises a device (40) arranged near said first end (11), capable of translating said lever portion (502_{b}) to adjust the positioning depth of said workpiece.

2. System (S) according to claim 1, comprising
a linear guide (130) arranged along said main body (1),
a slider (30), slidingly coupled to said linear guide (130),
a first slot (14) integral with said slider (30) and capable of sliding along said direction (X), wherein
said device (40) is capable of moving an end stop (41), operatively connected to said first slot (14), and wherein said slider (30) is connected to said lever portion (502_{b}), in such a way that said lever portion (502_{b}) can slide along a second slot (15) arranged along said direction (X) to adjust the positioning depth of said workpiece when said slider (30) slides as a result of the movement of said first slot (14).

3. System (S) according to any of the preceding claims, wherein said at least one actuator (20) comprises a first actuator means (21) arranged in proximity to said first end (11), and a second actuator means (22) operatively connected with said first actuator means (21).

4. System (S) according to the preceding claim, when dependent on claim 2, wherein said first actuator means (21) is configured to linearly move said first slot (14) along said direction (X) and wherein said end stop (41) is arranged to counteract the movement of said first slot (14) due to the effect of said first actuator means (21).

5. System (S) according to claim 3 or 4, wherein said second actuator means (22) is capable of moving a head (501) of said reference means (50) from said first supporting position to said second operating position and vice versa.

6. System (S) according to any one of claims 2-5, **characterized in that** said device (40) comprises a numerical indicator (402) configured to indicate a positioning quota of said end stop (41).

7. System (S) according to any one of claims 2-6, wherein each of said first (21) and second (22) actuators is a pneumatic cylinder connected to a line of air configured to supply each of said pneumatic cylinders.

8. System (S) according to any one of claims 2-7, wherein said end stop (41) has a screw, and wherein said device (40) comprises a stem having a thread operably connectable to said screw, in such a way as to allow the translation of said end stop (41) along a track (42) as a function of the rotation of said stem.

9. System (S) according to the preceding claim, further comprising a clutch arranged near said screw and configured to reduce the play between said end stop (41) and said threading of said stem.

10. System (S) according to any one of the preceding claims, wherein said device (40) comprises a micrometric stop adjuster for varying the positioning depth with micrometric precision.

11. System (S) according to the preceding claim, wherein said micrometric adjuster comprises an electrically driven motor, preferably a stepper motor, or other controlled regulation system.

12. System (S) according to claim 10 or 11, wherein said micrometric stop adjuster comprises a knob (401) connected to a threaded stem, wherein said knob (401) cooperates with said stem to adjust the depth of positioning/stop.

13. System (S) according to any one of claims 3-12, which comprises a sensor for detecting the deviation of said first actuator (21) from a reference position.

14. Machine (M) for processing workpieces made of wood, fiber cement, plastic materials, resins, wood composites, expanded materials, or the like, comprising a system (S) according to any of the preceding claims.

15. Machine (M) according to the preceding claim wherein said machine (M) is a tenoning machine, a mortiser machine, a molding machine, a profiling machine or a drilling machine.
